# EUROPEAN PATENT APPLICATION

(11) **EP 1 659 491 A1**
(43) Date of publication of application: **24.05.2006**
(21) Application number: 05251350.4
(22) Date of filing: 07.03.2005
(51) Int. Cl.: G06F 9/445

(54) **Update control program, update control method and update control device**

(30) Priority: 22.11.2004 JP 2004337825
(71) Applicant: FUJITSU LIMITED, Kawasaki-shi, Kanagawa 211-8588 (JP)
(72) Inventor: Yuuki, Kazuhiro c/o Fujitsu Ltd, Kawasaki-shi Kanagawa 211-8588 (JP)
(74) Representative: Stebbing, Timothy Charles

(57) **Abstract**

An update control device (10) retrieves consistency information related to a combination of an update control program that carries out update control of a hardware control program (HCP), a diagnostic program, and system boards (30-1,... 30-n), determines the applicability of an update version of the hardware control program based on the consistency information, and carries out update control of the hardware control program when the update version of the hardware control program is determined to be applicable.

## Description

The present invention relates to an update control program, an update control method, and an update control device of a hardware control program, which is a set of individual firmware that runs in single partition units or a plurality of partition groups.

Configurations wherein a plurality of operating systems (OS) run simultaneously in a plurality of partitions have been in use conventionally in order to implement large high performance computer systems (for example, Japanese Patent Laid-Open Publication No. 2004-213178). When firmware is to be updated in such computer systems, in order to improve the cost effectiveness as well as to reduce the maintenance time, a revised edition of the firmware is downloaded from prescribed media (for example, Magneto Optic disc (MO disc), Digital Versatile Disc (DVD), magneto optic disc, and the like) or server devices present on the network. Thus, usually software techniques are adopted to carry out update operations wherein the downloaded revised firmware is applied to the computer system.

However, in the conventional technology (Japanese Patent Laid-Open Publication No. 2004-213178) it is not possible to carry out update operations when the system is running. To be specific, in the conventional technology, when firmware that run in single partition units coexist with firmware that run in system units, it is not possible to update the partition units without affecting the operation of other partitions while at the same time maintaining the consistency of the hardware control program of the entire computer system.

In other words, large high performance computer systems need to be running non-stop round the clock. However, since the conventional computer systems are configured to run in a plurality of operating systems (partitions), it is not possible to check the consistency between the partitions while updating the firmware of different versions in each of the partition units. Thus, configuration with a plurality of partitions can only be updated to the same version of firmware, making it impossible to revise the version unless the system is stopped.

According to an aspect of the present invention, an update control method of carrying out update control of a hardware control program, the hardware control program being a set of individual firmware that runs in single partition units or a plurality of partition groups includes retrieving consistency information related to a combination of the computer program, a diagnostic program, and system boards; determining an applicability of an update version of the hardware control program based on the consistency information retrieved; and performing update control of the hardware control program when the update version of the hardware control program is determined to be applicable in the determining step.

According to another aspect of the present invention, an update control apparatus for carrying out update control of a hardware control program, the hardware control program being a set of individual firmware that runs in single partition units or a plurality of partition groups includes a consistency information retrieval unit that retrieves consistency information related to a combination of a computer program that carries out update control of the hardware control program, a diagnostic program, and system boards; an applicability determining unit that determines an applicability of an update version of the hardware control program based on the consistency information retrieved by the consistency information retrieval unit; and an update control unit that updates control of the hardware control program when the update version of the hardware control program is determined to be applicable by the applicability determining unit.

According to still another aspect of the present invention, a computer-readable recording medium stores therein a computer program that implements the above method on a computer.

The other features and advantages of the present invention are specifically set forth in or will become apparent from the following detailed description of the invention when read in conjunction with the accompanying drawings, in which:
Fig. 1 is a block diagram of an update control device according to a first embodiment of the present invention;
Fig. 2 is a schematic for explaining contents of an administrative file;
Fig. 3 is a schematic for explaining contents of the administrative file;
Fig. 4 is a schematic for explaining contents of consistency information;
Fig. 5 is a flowchart of an update process according to the first embodiment; and
Fig. 6 is a flowchart of a restoration process according to the first embodiment.

Exemplary embodiments of the present invention are explained next with reference to the accompanying drawings.

The terms used in the present embodiment is explained first, followed by an overview and the salient features of the update control device according to the present invention. The update control device according to a first embodiment is explained next, and examples of various modifications (a second embodiment) are explained in the end as other embodiments.

The terms used in the present embodiment are explained next. "Update" used in the present embodiment denotes "update control process", which includes "downloading" involving expansion of data from an external source to a buffer of a service processor, writing to FMEM (flash memory), as well as "application" in which the data written to the FMEM is expanded for actual use.

Further, "individual firmware" used in the present embodiment denotes firmware that runs in partition units, as well as firmware that runs in a plurality of partition groups (system units). A set of individual firmware is called a hardware control program (HCP).

Further, an update control program that carries out update control of the hardware control program is called a service processor program (hereinafter, "SVP").

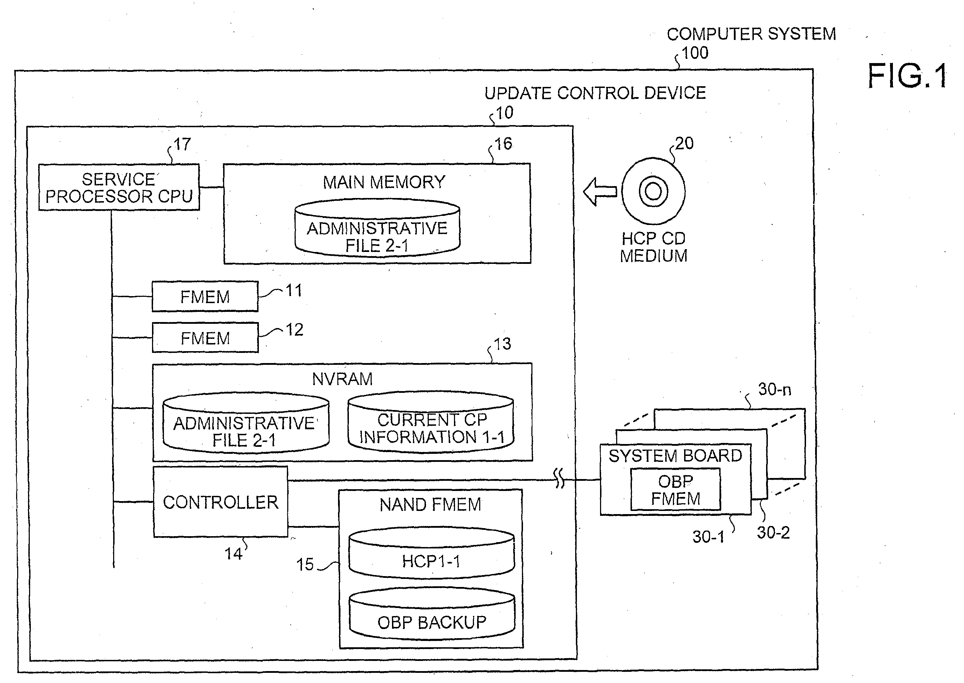

An overview and the salient features of the update control device according to the present invention are explained first. Fig. 1 is a block diagram of an update control device 10 according to the first embodiment of the present invention. The update control device 10 is installed on a computer system 100 that simultaneously runs a plurality of operating systems in a plurality of partitions (in other words, system boards 30-1 through 30-n (hereinafter, "SB 30")). The update control device 10 carries out update control of the HCP, which is a set of individual firmware that runs in the partition units or a plurality of partition groups.

The update control device 10 retrieves consistency information related to the combination of the update control program "SVP" that carries out update control of the hardware control program "HCP", a diagnostic program "POST (Power On Self Test)" and the system boards "SB". Based on the retrieved consistency information, the update control device 10 determines the applicability of an update version of the "HCP", and carries out update control of the "HCP" when the update version of the "HCP" is found to be applicable. The salient feature of the present invention is the update control process (update process), which can be carried out when the system is running.

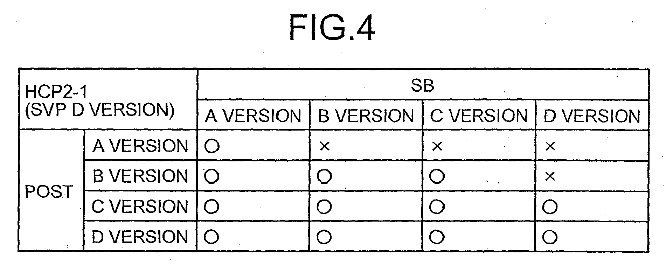

To be specific, the update control device 10 determines, based on the consistency information (see Fig. 4) related to the combination of the "SVP", the "POST", and the "SB", the applicability of the update version of the "HCP", and carries out update control of the "HCP" when the update version of the "HCP" is found to be applicable. Thus, even if the entire computer system 100 is not uniformly updated to the latest version of the "HCP", different versions of firmware are permitted to coexist long as there is mutual functional compatibility among them.

Thus, even when the entire computer system 100 is not uniformly updated to the latest version of the "HCP", since different versions of firmware are permitted to coexist as long as there is mutual functional compatibility among them. Therefore, update operation can be carried out when the system is running, providing a solution to the problem in the conventional technology, namely, not being able to check the consistency between the partitions while updating the firmware of different versions in each of the partition units.

The update control device 10 includes FMEM 11 and 12, an NVRAM 13, a controller 14, a NAND FMEM 15, a main memory 16, and an SVP CPU 17.

The FMEM 11 and the FMEM 12 are flash memories that store the "HCP" that expands in the main memory 16. Taking into consideration the restoration process after the update process, the "HCP" is stored in the FMEM in blocks of two generations, namely, "current bank" and "reserved bank". "Current bank" denotes the bank currently in use (for example, the FMEM 11), and "reserved bank" denotes the old bank (for example, the FMEM 12). The downloaded update version of the "HCP" is written to the "reserved bank" (in other words, the FMEM 12).

The NVRAM 13 is a nonvolatile RAM that stores information pertaining to the "HCP" currently in use. The NVRAM 13 stores an administrative file 1-1 and current HCP information 1-1. The controller 14 is a communication control interface that connects the system boards (SB) 30 and the update control device 10 and enables mutual communication between them. The NAND FMEM 15 is a CompactFlash card (registered Trademark) that stores the "HCP" as well as OBP backup (for example, n generations).

The SVP CPU 17 runs the service processor program (SVP) that carries out update control of the hardware control program, which is a set of individual firmware that runs in a single partition unit or a plurality of partition groups.

To be specific, the SVP CPU 17, upon receiving an update request, retrieves an administrative file 2-1 of the update version of the "HCP" from an HCP CD 20 via a not shown drive. The administrative file 2-1 includes the "consistency information" according to the present invention. Thus, retrieving the consistency information included in the update version of "HCP" ensures that always the latest consistency information is retrieved.

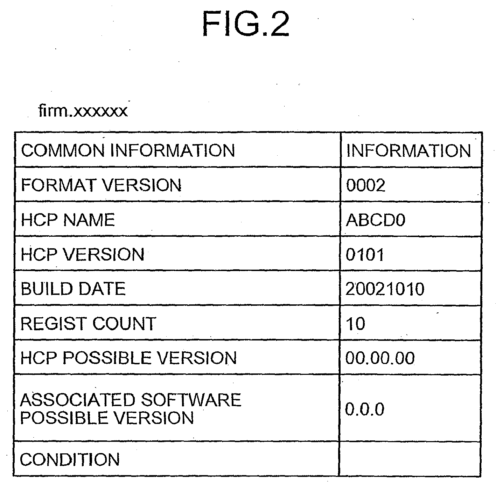

The administrative file 2-1 includes common system information of the update version of "HCP 2-1" as well as information pertaining to each individual firmware. To be specific, as shown in Fig. 2, the common system information of the administrative file 2-1 includes "HCP administrative file version", "HCP name", "HCP version", "HCP build date", "Registration count", "HCP possible version", "associated software possible version", and so on.

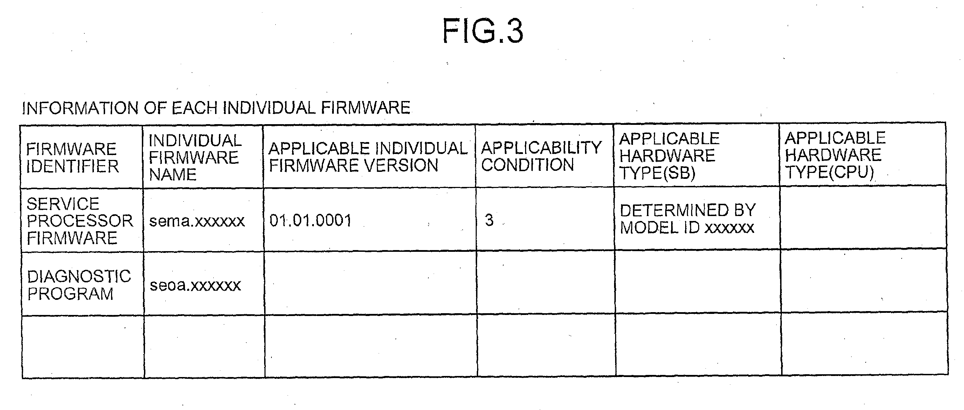

The information pertaining to each individual firmware in the administrative file 2-1 includes for each item of firmware, the "applicable individual firmware version" and "applicability conditions" stored in a correlated form (see Fig. 3). The "applicable individual firmware version" denotes the updateable version for each of the individual firmware versions that are currently in use. The "applicability conditions" denotes the conditions (for example, 1. possible upon stopping the system (under 5VSB), 2. possible when the system is offline, and 3. possible when the system is running) for downloading the individual firmware unit.

The "consistency information" included in the administrative file 2-1 is the consistency information related to the combination of the "SVP" that carries out update control of the HCP, the "POST" as well as the "SB". For example, according to the consistency information shown in Fig. 4, when "SVP" is in "version D", there is consistency between "version A" of "POST" and "version A" of "SB", but there is no consistency between "version A" of "POST" and "version B" and subsequent versions of "SB".

To return to Fig. 1, the SVP CPU 17, after retrieving the administrative file 2-1 of the update version of the "HCP", receives specification of the partition number in which the update is to be carried out. Referring to the administrative file 2-1, the SVP CPU 17 checks whether the "SVP" in the update control device 10 can support the SB 30 of the partition in which the update is to be carried out.

If the "SVP" can support the SB 30 of the partition in which update is to be carried out, the SVP CPU 17 determines the applicability of the update version of the "HCP" based on the current HCP information as well as the consistency information included in the installed administrative file. Specifically, the SVP CPU 17 determines whether the update "OBP" version is consistent in the computer system 100.

To be more specific, the SVP CPU 17 refers to the applicable "OBP" versions in the administrative file 2-1 and checks whether all the "OBP" versions in the computer system 100 are supported. For example, if the applicable "OBP" versions in the administrative file 2-1 are "version B", "version C", and "version D", the SVP CPU 17 determines that all the "OBP" versions in the computer system 100 are supported if the "OBP" versions in the computer system 100 are "version B" or higher. However, if the computer system 100 includes "version A", the SVP CPU 17 determines that all the "OBP" versions in the computer system 100 are not supported.

Further, if the update version of the "HCP" is applicable, (in other words, when all the "OBP" versions in the computer system 100 are supported), the SVP CPU 17 checks for the presence of space in the OBP backup area in the NAND FMEM 15. To be specific, the SVP CPU 17 stops the update process when there is no free space in the OBP backup area, or when overwriting is not possible.

Further, when there is free space in the OBP backup area, the SVP CPU 17 displays for confirmation via an output interface the current version of the "HCP" and the update version of the "HCP", and downloads the update version of the "HCP" upon receiving an update instruction. The update version of the "HCP" is written to the FMEM 12 (in other words, written to the "reserved bank").

If there is a write error in the update version of the "HCP" or if the update version of the "HCP" does not run, the SVP CPU 17 runs the earlier version of the "HCP". To be specific, if a write error (SumCheck error) is detected during downloading, or if SCF cannot be started due to FMEM failure, the SVP CPU 17 runs the earlier version of the "HCP".

To be specific, if a write error (SumCheck error) occurs after downloading, the SVP CPU 17 once again tries to download, and if failure is detected again, does not allow switching to the failed bank. Since the currently running FMEM 11 (in other words, the "current bank") is normal, the operation can be continued. Since control is exerted so as to disallow bank switching, switching to the failed FMEM 12 does not take place. Thus, even when a new update is carried out, there is no risk of failure. Changing the SVP board at an appropriate time in the course of maintenance can prevent the failure of the FMEM elements in the failed bank.

The SVP CPU 17 also includes the function of monitoring the SVP firmware with the aid of the SVP hardware. In other words, if there is no response from the firmware for a predetermined length of time following the command SVP CPU RESET, the SVP CPU 17 carries out a forced switching of banks by means of the hardware, and makes valid the old version. Thus, inability of the system to start due to continued failure can be prevented. Moreover, the firmware cannot switch back to the bank that is switched by the hardware by means of forced bank switching. Consequently, occurrence of further failure is prevented.

Thus, even if there is a failed update control process (update process) due to a write error in the update version of the hardware control program or due to the update version of the hardware control program not running, normal operation of the system is restored by running the earlier version of the firmware by running the earlier version of the hardware control program.

The sequence of processes of the update control device 10 according to the first embodiment is explained next. The update control process (update process) is explained first, followed by an explanation of a restoration process that is carried out when there is a failure during the update.

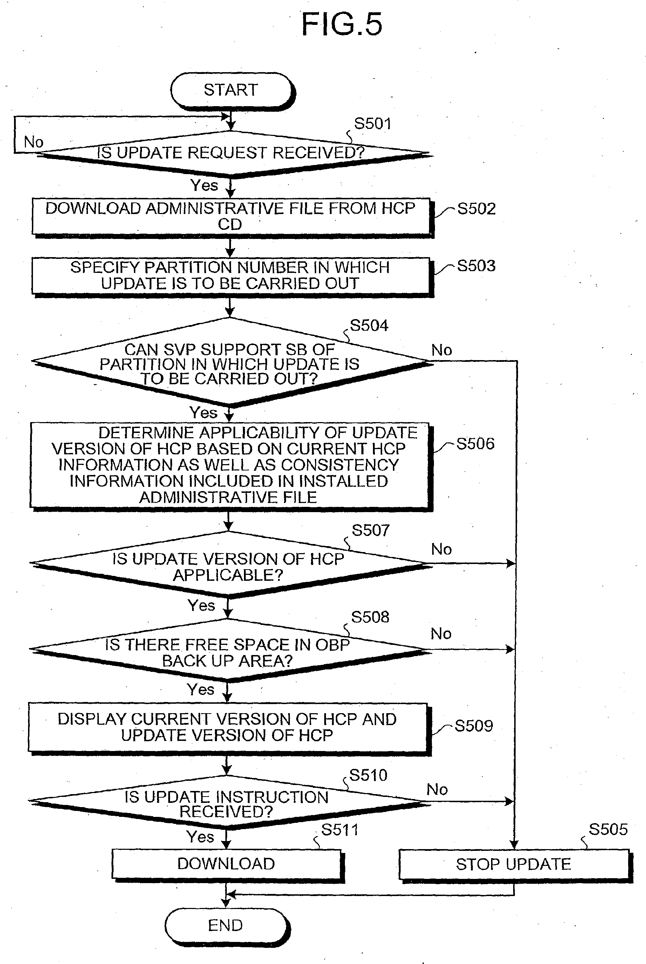

The update process according to the first embodiment is explained next. Fig. 5 is a flowchart of the update process according to the first embodiment. The SVP CPU 17, upon receiving an update request, ("Yes" at step S501) retrieves the administrative file 2-1 of the update version of the "HCP" from the HCP CD 20 via the not shown drive (step S502).

Next, the SVP CPU 17 receives specification of the partition number in which the update is to be carried out (step S503), and by referring to the administrative file 2-1, checks whether the "SVP" in the update control device 10 can support the partition SB 30 in which the update is to be carried out. If the "SVP" cannot support the partition SB 30 in which the update is to be carried out ("No" at step S504), the SVP CPU 17 stops the update process (step S505), ending the process.

If the "SVP" can support the SB 30 of the partition in which update is to be carried out ("Yes" at step S504), the SVP CPU 17 determines the applicability of the update version of the "HCP" based on the current HCP information as well as the consistency information included in the installed administrative file (step S506). Specifically, The SVP CPU 17 determines whether the update "OBP" version is consistent in the computer system 100.

To be more specific, the SVP CPU 17 checks whether all the "OBP" versions in the computer system 100 are supported by checking the applicable "OBP" versions in the administrative file 2-1. For example, if the applicable "OBP" versions in the administrative file 2-1 are "version B", "version C", and "version D", the SVP CPU 17 determines that all the "OBP" versions in the computer system 100 are supported if the "OBP" versions in the computer system 100 are "version B" or higher. However, if the computer system 100 includes "version A", the SVP CPU 17 determines that all the "OBP" versions in the computer system 100 are not supported.

Further, if the update version of the "HCP" is applicable ("Yes" at step S507) and there is free space in the OBP backup area ("Yes" at step S508), the SVP CPU 17 displays for confirmation via the output interface the current version of the "HCP" version and the update version of the "HCP" (step S509), and upon receiving an update instruction ("Yes" at step S510), downloads the update version of the "HCP" (step S511), thus ending the process. The update version of the "HCP" is written to the FMEM 12 (in other words, written to the "reserved bank").

On the other hand, if the update version of the "HCP" is not applicable ("No" at step S507), or if there is no free space in the OBP backup area ("No" at step S508), or upon receiving a stop update instruction ("No" at step S510), the SVP CPU 17 stops the update process (step S505), ending the process.

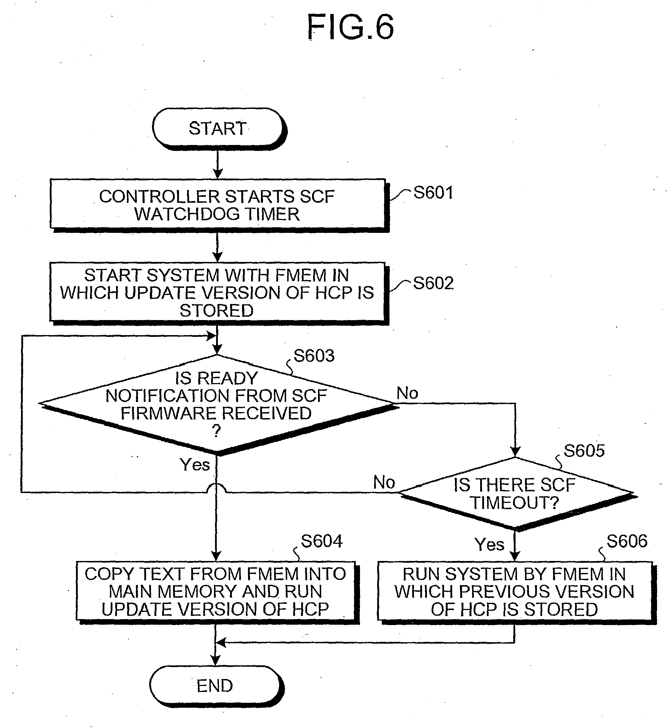

The restoration process according to the first embodiment is explained next. Fig. 6 is a flowchart of the restoration process according to the first embodiment. The restoration process starts if the SCF (service processor of the partitions) is reset after the update version of the "HCP" is downloaded.

First, in the update control device 10, the controller 14 starts an SCF watchdog timer (step S601), and starts the system (step S602) with the aid of the FMEM 12 (in other words, "old reserved bank") in which the update version of the "HCP" is stored.

The SVP CPU 17, upon receiving a "ready notification" from the SCF firmware ("Yes" at step S603), copies the update version of the "HCP" from FMEM 12 into the main memory 16 and runs the update version of the "HCP" (step S604).

If no "ready notification" is received from the SCF firmware ("No" at step S603), and if there is SCF timeout ("Yes" at step S605), the SVP CPU 17 runs the computer system 100 by switching the bank to FMEM 11 (in other words, "old current bank") in which the previous version of the "HCP" is stored (step S606).

In the update control device 10, even if the entire computer system 100 is not uniformly updated to the latest version of the "HCP", different versions of a firmware are permitted to coexist as long as there is mutual functional compatibility among them. Thus, firmware of the same type but different versions are permitted to coexist, and update can be carried out when the system is running.

Moreover, in the update control device 10 according to the first embodiment, even if there is a failed update control process (update process), normal operation of the system is restored with the aid of the previous version of the firmware.

Firmware of a revised version is downloaded from the HCP CD 20 in the first embodiment. However, the present invention may be similarly applied when downloading firmware of a revised version from other media (for example, MO disc, DVD, magneto optic disc, and the like), or from server devices connected to the network.

All the automatic processes explained in the present embodiment can be, entirely or in part, carried out manually. Similarly, all the manual processes explained in the present embodiment can be entirely or in part carried out automatically by a known method. The sequence of processes, the sequence of controls, specific names, and data including various parameters can be changed as required unless otherwise specified.

The constituent elements of the device illustrated are merely conceptual and may not necessarily physically resemble the structures shown in the drawings. For instance, the device need not necessarily have the structure that is illustrated. The device as a whole or in parts can be broken down or integrated either functionally or physically in accordance with the load or how the device is to be used. The process functions performed by the device are entirely or partially realized by the CPU or a program executed by the CPU or by hardware using wired logic.

According to the present invention, even when the entire computer system is not updated to the latest version of the hardware control program, different versions of the hardware control program are permitted to coexist as long as there is mutual functional compatibility among them, and the update can be carried out when the system is running. Moreover, always the latest consistency information is retrieved. Furthermore, even if there is a failed update control process (update process) due to a write error in the update version of the hardware control program or due to the update version of the hardware control program not running, normal operation of the system is restored by running the earlier version of the firmware by running the earlier version of the hardware control program.

Although the invention has been described with respect to a specific embodiment for a complete and clear disclosure, the appended claims are not to be thus limited but are to be construed as embodying all modifications and alternative constructions that may occur to one skilled in the art that fairly fall within the basic teaching herein set forth.

## Claims

1. A computer-readable recording medium that stores therein a computer program to implement on a computer update control of a hardware control program, the hardware control program being a set of individual firmware that runs in single partition units or a plurality of partition groups, the computer program causing the computer to execute the steps of:
retrieving consistency information related to a combination of the computer program, a diagnostic program, and system boards;
determining an applicability of an update version of the hardware control program based on the consistency information retrieved; and
performing update control of the hardware control program when the update version of the hardware control program is determined to be applicable in the determining step.

2. The computer-readable recording medium according to claim 1, wherein the retrieving step includes retrieving the consistency information included in the update version of the hardware control program.

3. The computer-readable recording medium according to claim 1, wherein the step of performing update control includes running an earlier version of the hardware control program when there is a write error in the update version of the hardware control program or when the update version of the hardware control program does not run.

4. An update control method of carrying out update control of a hardware control program, the hardware control program being a set of individual firmware that runs in single partition units or a plurality of partition groups, comprising the steps of:
retrieving consistency information related to a combination of the computer program, a diagnostic program, and system boards;
determining an applicability of an update version of the hardware control program based on the consistency information retrieved; and
performing update control of the hardware control program when the update version of the hardware control program is determined to be applicable in the determining step.

5. The update control method according to claim 4, wherein the retrieving step includes retrieving the consistency information included in the update version of the hardware control program.

6. The update control method according to claim 4, wherein the step of performing update control includes running an earlier version of the hardware control program when there is a write error in the update version of the hardware control program or when the update version of the hardware control program does not run.

7. An update control apparatus for carrying out update control of a hardware control program, the hardware control program being a set of individual firmware that runs in single partition units or a plurality of partition groups, comprising:
a consistency information retrieval unit that retrieves consistency information related to a combination of a computer program that carries out update control of the hardware control program, a diagnostic program, and system boards (partitions);
an applicability determining unit that determines an applicability of an update version of the hardware control program based on the consistency information retrieved by the consistency information retrieval unit; and
an update control unit that updates control of the hardware control program when the update version of the hardware control program is determined to be applicable by the applicability determining unit.

8. The update control apparatus according to claim 7, wherein the consistency information retrieval unit retrieves the consistency information included in the update version of the hardware control program.

9. The update control apparatus according to claim 7, wherein the update control unit runs an earlier version of the hardware control program when there is a write error in the update version of the hardware control program or when the update version of the hardware control program does not run.
